# EUROPÄISCHE PATENTSCHRIFT

(11) **EP 0 985 636 B1**
(45) Veröffentlichungstag und Bekanntmachung des Hinweises auf die Patenterteilung: **14.11.2001**
(21) Anmeldenummer: 99117361.8
(22) Anmeldetag: 03.09.1999
(51) Int. Cl.: C01B 37/00, C01B 37/02, B01J 20/10, C08K 3/34, B01J 29/00, C09B 63/00

(54) **Kieselsäuren und Metallsilikate mit regelmässiger Mesoporenstruktur**
Silicas and metallosilicates having a regular mesoporous structure
Silices et métallosilicates à structure mésoporeuse régulière

(30) Priorität: 09.09.1998 DE 19841142
(43) Veröffentlichungstag der Anmeldung: 15.03.2000
(73) Patentinhaber: Degussa AG, 40474 Düsseldorf (DE)
(72) Erfinder: Hasenzahl, Steffen, Dr., 63477 Maintal (DE); Schubert, Jürgen, Dr., 63584 Grümdau-Mittel-Gründau (DE); Jantke, Ralf, 63776 Mömbris (DE)

(56) Entgegenhaltungen:
- EP-A- 0 831 059
- EP-A- 0 935 996
- WO-A-97/16374
- DE-A- 19 704 875
- WANG LIWEI ET AL: "Preparation of mesoporous silica by co-precipitation in the presence of non-ionic surfactant" MATERIALS CHEMISTRY AND PHYSICS, 25 MAY 1999, ELSEVIER, SWITZERLAND, Bd. 59, Nr. 2, Seiten 171-174, XP002121521 ISSN: 0254-0584
- KWON OH-YUN ET AL: "Synthesis of mesoporous molecular sieves. Hydrolysis of H2SiF6 by a non-ionic polyethylene oxide surfactant template" MICROPOROUS MESOPOROUS MATER;MICROPOROUS AND MESOPOROUS MATERIALS 1999 ELSEVIER SCI B.V., AMSTERDAM, NETHERLANDS, Bd. 27, Nr. 2, 1999, Seiten 255-259, XP002120562
- DATABASE WPI Section Ch, Week 199925 Derwent Publications Ltd., London, GB; Class D21, AN 1999-296384 XP002120564 & JP 11 100208 A (SHISEIDO CO LTD), 13. April 1999 (1999-04-13)
- CHEMICAL ABSTRACTS, vol. 127, no. 4, 28. Juli 1997 (1997-07-28) Columbus, Ohio, US; abstract no. 59735, KITAYAMA, YOSHIE ET AL: "Synthesis of mesoporous aluminosilicate (Al-FSM)" XP002120563 & NENDO KAGAKU (1997), 36(4), 180-187 , 1997,

## Beschreibung

Die Erfindung betrifft durch Fällung hergestellte amorphe Kieselsäuren und Metalisilikate mit enger MesoporenradienVerteilung, ein Verfahren zu ihrer Herstellung und ihre Verwendung.

Poröse, kristalline Materialien mit regelmäßiger Mesoporenstruktur sind seit Beginn der 90er Jahre bekannt (EP-B 0 512 026). Sie werden mit der Abkürzung M41S bezeichnet und weisen neben der regelmäßigen Porenstruktur eine enge Porenverteilung auf. Die bekannteste Verbindung aus dieser Gruppe trägt die Bezeichnung MCM-41. Sie weist hexagonal angeordnete, eindimensionale Poren mit definiert einstellbaren Durchmessern im Bereich zwischen 1,6 und 5 nm auf. Dies wird durch die Elektronenbeugungsdiagramme belegt, die auf Basis einer hexagonalen Einheitszelle indiziert werden können. MCM-48 mit einer dreidimensionalen Porenstruktur ist durch eine kubische Elementarzelle charakterisiert. (Beck et al., J. Am. Chem. Soc. 114 (1992) 10834).
M41S-Materialien zeigen außerdem charakteristische Puver-Röntgendiffraktogramme mit breiten und intensiven Reflexen im Kleinwinkel-Streubereich bei 2θ < 5 . Weiterhin ist ihre Oberfläche größer als 700 m²/g und kann Werte bis 1.400 m²/g erreichen. Ihre Porenvolumina liegen zwischen 0,7 und 1,2 ml/g.

Diese mesoporösen Materialien weisen außerdem eine hohe Adsorptionskapazität für Kohlenwasserstoffe auf.

Charakteristisch für die Herstellung von Materialien mit MCM-41- und MCM-48-Struktur ist der Einsatz von Tensiden vom Typ Me₃N(CₙH₂ₙ₊₁)⁺ X⁻ mit n > 8 als strukturbildendes Agens (Templat), wie z. B. Cetyltrimethylammonium-Verbindungen (Cetyl = C₁₆H₃₃). X⁻ ist im allgemeinen ein Anion aus der Reihe OH⁻, Cl⁻, Br⁻.

Als Siliciumquellen können beispielsweise Natriumwasserglas, Tetramethylammoniumsilikatlösungen, Kieselsole, pyrogenes Siliciumdioxid oder Tetraethylorthosilicat eingesetzt werden. Auch Kanemit kann als Ausgangsstoff eingesetzt werden (T. Yanagisawa, Bull. Chem. Soc. Jpn., **63**, 988 - 992 (1990)).

Synthesen mit dem kostengünstigen Natriumwasserglas als Siliciumquelle werden bei pH-Werten größer als 9 und bei Temperaturen von oder über 100 °C durchgeführt (Chen et al., Microp. Mat. 2 (1993) 17; Beck et al., J. Am. Chem. Soc. 114 (1992) 10834). Die Kristallisationsdauer beträgt, abhängig von der Kristallisationstemperatur, zwischen einem und zwölf Tagen.

Die Zugabe von Metallsalzen zu den Synthesemischungen ermöglicht die Herstellung entsprechender Metallsilikate mit regelmäßiger Mesoporenstruktur (EP 0 512 026 B1).

Diese bekannten Verfahren weisen den Nachteil auf, daß lange Kristallisationszeiten benötigen werden. Weiterhin können die bekannten Verfahren nur in geschlossenen Druckgefäßen, wie z. B. Autoklaven, durchgeführt werden. Von weiterem Nachteil ist, daß die Ausgangsmaterialien, wie pyrogenes Siliciumdioxid oder Tetraethylorthosilicat, relativ teuer sind.

US-A 5,840,264 beschreibt "calcined crystalline inorganic compositions having textural mesopores".

Materialien mit der Zusammensetzung SiO₂ (als MMS-Struktur bekannt) zum Beispiel können durch Hydrolyse von Tetraalkoxysilanen in Gegenwart von langkettigen primären Aminen der allgemeinen Formel (CₙH₂ₙ₊₁)NH₂ mit n > 8 hergestellt werden (P.T. Tanev, T.J. Pinnavaia, Science 267 (1995) 865). Die Synthese wird bei Raumtemperatur durchgeführt. Als Lösungsmittel wird ein Wasser-Ethanol-Gemisch verwendet. Das als Templat eingesetzte Amin wird dann durch Extraktion mit Ethanol und anschließende Kalzination aus dem Porensystem des gebildeten Feststoffes entfernt.

Die auf diese Weise hergestellten Materialien zeichnen sich durch regelmäßig angeordnete Poren mit einstellbaren Durchmessern zwischen 1,6 und 3,1 nm und spezifische Oberflächen bis zu 1.150 m²/g aus. Das Röntgenpulverdiffraktogramm zeigt mindestens einen breiten Reflex bei 2θ ≈ 5 °. Außerdem beabachtet man zusätzlich große Poren, die als "textural mesopores" im Unterschied zu den oben genannten "frame-work-confined-mesopores" bezeichnet werden.

Bekannte Verfahren zur Herstellung von Metallsilikaten mit regelmäßigen Mesoporen unter Verwendung von Aminen als Template und die Verwendung dieser Substanzen als Katalysatoren beschreibt WO 96/29297.

Diese bekannten Verfahren haben den Nachteil, daß Tetraalkoxysilane relativ teuer sind und außerdem die Verwendung von Ethanol den Gebrauch ex-geschützter Reaktoren notwendig macht.

Das Dokument EP 0 831 059 A1 beschreibt ein mesoporöses Siliziumdioxid, das eine sehr gute mesoporöse Struktur der Siliziumdioxide aufweist.

Das Dokument DE 197 04 875 A1 beschreibt eine Zusammensetzung, die ein anorganisches poröses Material enthält.

Das Dokument WO 97/16374 beschreibt ein mesoporöses kristallines Material.

Es ist weiterhin bekannt, Kieselsäuren mit regelmäßiger Mesoporenstruktur durch Hydrolyse von Tetra-alkoxysilanen in Gegenwart von Tensiden auf Polyethylenoxid-Basis herzustellen (Bagshaw, E. Prouzet, T.J. Pinnavia, Science, 269(1995)1242). Als Tenside werden zum Beispiel die Alkylpolyethylenoxid-alkohole der Tergitol 15-S-n-Reihe (Union Carbide), die durch die allgemeinen Formel (C₁₁₋₁₅H₂₃₋ ₂₆)O(CH₂CH₂)ₙH mit n=9-30 dargestellt werden können, verwendet. Die Synthese selbst wird analog zur oben beschriebenen Synthese von Kieselsäuren mit regelmäßiger Mesoporenstruktur aus Tetraalkoxysilanen und primärem Aminen durchgeführt.

Die auf diese bekannte Weise hergestellten Materialien besitzen Kanalstrukturen mit einem einheitlichen Porendurchmesser zwischen 2,5 und 4,8 nm, der durch die Wahl des Tensides festgelegt wird. Die spezifische Oberfläche liegt zwischen 605 und 1190 m²/g. Das Röntgenpulverdiffraktogramm zeigt im allgemeinen nur einen breiten Reflex bei 2θ ≈ 5 °.

Auch dieses Herstellverfahren weist den Nachteil auf, daß die teuren Tetraalkoxysilane eingesetzt werden und die Verwendung von Ethanol den Gebrauch ex-geschützter Reaktoren notwendig macht. Eigene Versuche haben außerdem gezeigt, daß die Hydrolyse des Tetraethoxysilans nur langsam erfolgt und auch nach längeren Reaktionszeiten die Ausbeute der Kieselsäure < 10 %, bezogen auf das eingesetzte Tetraethoxysilan ist.

Die bekannten Verfahren zur Herstellung von Materialien mit regelmäßiger Mesoporenstruktur weisen also alle eine Reihe von folgenden Nachteilen auf:
- Verwendung teurer Rohstoffe, wie z. B. Tetraethoxysilan oder Aerosile (pyrogene Kieselsäure), quarternäre Annoniumsalze
- Einsatz druckfester oder ex-geschützter Reaktoren
- teilweise lange Reaktionszeiten
- teilweise geringe Ausbeuten
- die erhaltenen Stoffe besitzen recht kleine Gesamtporenvolumina und eine nicht ausreichende thermische Stabilität

Es bestand daher die Aufgabe, einfache und kostengünstige Verfahren zur Herstellung Materialien mit regelmäßiger Mesoporenstruktur zu entwickeln, die die Nachteile der bekannten Verfahren nicht aufweisen.

Gegenstand der Erfindung sind durch Fällung hergestellten amorphe Kieselsäuren und Metallsilikate, welche dadurch gekennzeichnet sind, daß
a) sie eine enge Mesoporenradienverteilung aufweisen,
b) wobei der mittlere Porendurchmesser für alle Poren zwischen 2 und 10 nm einen Wert zwischen 2 und 8 nm hat,
c) die spezifische Oberfläche größer als 500 m²/g, bevorzugt größer als 700 m²/g, ist
d) das Gesamtporenvolumen größer als 3,0 ml/g, bevorzugt größer 4,0 ml/g, ist,
e) das Porenvolumen für Poren zwischen 2 und 30 nm größer als 0,5 ml/g, bevorzugt größer als 0,8 ml/g, ist,
f) keine oder nur wenig Mikroporen aufweisen
g) frei von kristallinen Phasen sind beziehungsweise keine Fernordnung aufweisen
h) die Zahl der Silanolgruppen, bezogen auf die spezifische Oberfläche, kleiner als 3 nm⁻², bevorzugt kleiner als 2 nm⁻², ist,

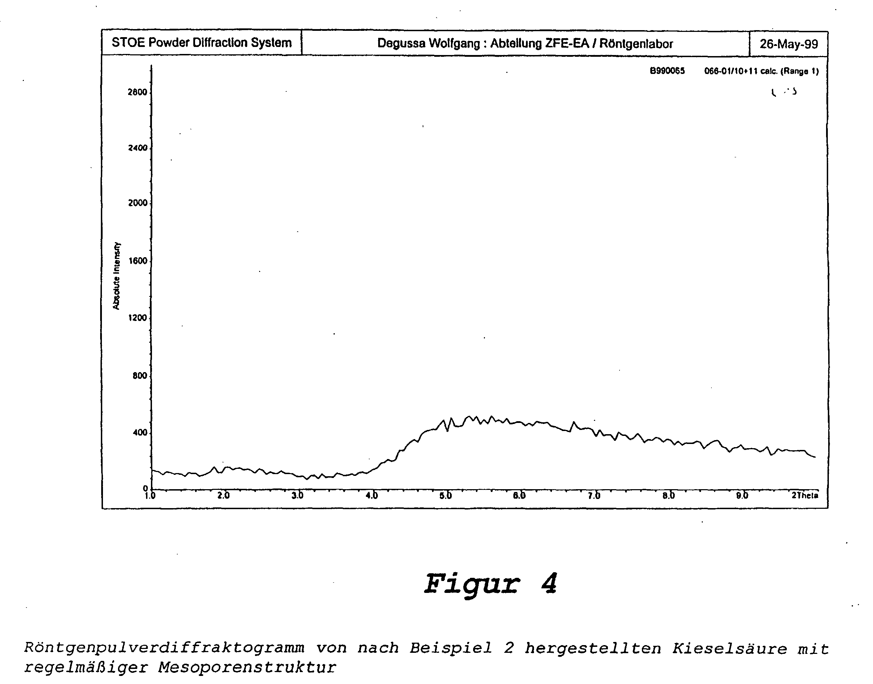

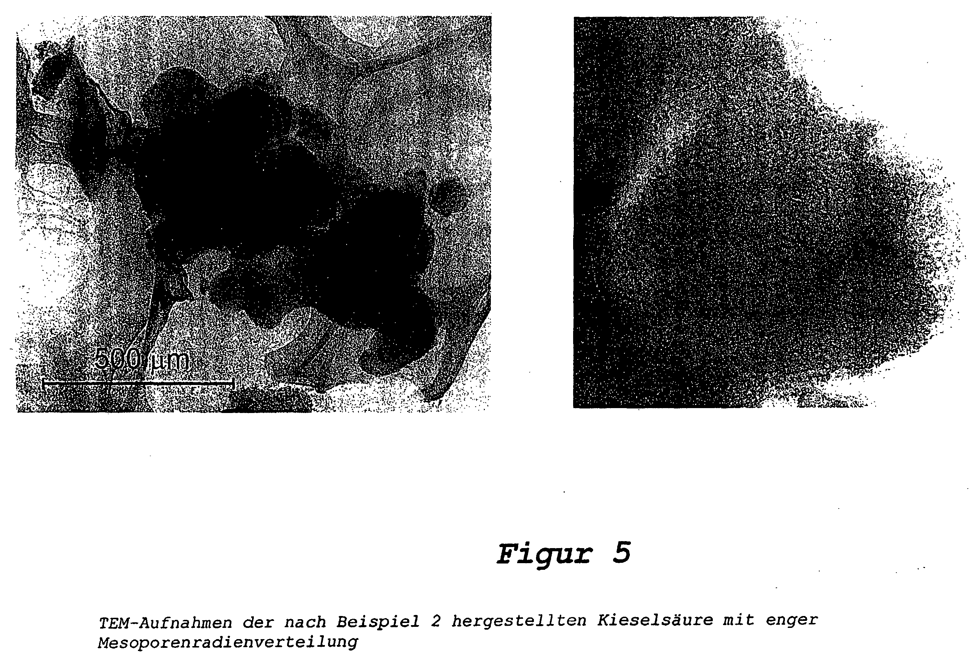

Die Abwesenheit kristalliner Phasen, d.h. die fehlende Fernordnung der erfindungsgemäßen Materialien wird durch die Transmissionselektronenmikroskopie(TEM) und Röntgenpulverdiffraktomerie nachgewiesen. Während die TEM-Aufnahme von MCM-41 (vgl. Seite 10837 von J.S. Beck et al.J. Am. Chem. Soc. 114 (1992) 10834) eine hexagonale Struktur zeigt, ist hier keine regelmäßige Struktur zu beobachten (Figur 5). Außerdem ist das Röntgendiffraktogramm von MCM-41 durch mehrere scharfe Reflexe charakterisiert (vgl. Seite 10836 von J.S. Beck et al.). Erfindungsgemäße Materialien sind hingegen völlig röntgenamorph (Figur 4) oder aber es wird nur ein breiter Reflex - infolge des einheitlichen Porendurchmessers - im Kleinwinkelstreubereich beabachtet.

Erfindungsgemäß werden Poren mit Durchmessern zwischen 2,0 und 30 nm als Mesoporen, Poren mit Durchmessern < 2,0 nm als Mikroporen und Poren mit Durchmesser > 30 nm als Makroporen bezeichnet.

Die Bestimmung des Porenvolumens für Poren mit 2 - 30 nm sowie der Porengrößenverteilung erfolgt mittels N₂-Sorption nach der BJH-Methode (DIN 66134). Die spezifische Oberfläche wird durch N₂-Adsorption nach der BET-Methode ermittelt (DIN 66131). Das Makroporenvolumen für Poren größer 30 nm wird mittels Hg-Porosimetrie nach DIN 66133 bestimmt. Das Gesamtporenvolumen ergibt sich aus der Summe von Meso- und Makroporenvolumen.

Der mittlere Porendurchmesser wird nach der Formel 4V/A berechnet, wobei V das kumulierte Volumen der Poren zwischen 2 und 10 nm und A die kumulierte Oberfläche der Poren zwischen 2 und 10 nm ist.

Die Silanolgruppendichte wird durch volumetrische Bestimmung des bei Umsetzung eines bei 120°C getrockneten Materials (Trocknungsdauer 1 h) mit LiAlH₄ in Diethylenglykoldimethylether gebildeten Wasserstoffs gemessen und auf die spezifische Oberfläche bezogen (Schriftenreihe Pigmente, Grundlagen von Aerosil® , Nr. 11, Degussa AG).

Die Searszahl wird bestimmt nach der Methode beschrieben in G. W. Sears, Analytical Chemistry, Volume 28, No. 12, 1956.

Die erfindungsgemäßen durch Fällung hergestellten amorphen Kieselsäuren und Metallsilikate mit enger Mesoporenradienverteilung können nach verschiedenen Verfahren hergestellt werden.

Ein weiterer Gegenstand der Erfindung sind Verfahren zur Herstellung von amorphen Kieselsäuren und Metallsilikate mit regelmäßiger Mesoporenstruktur, die dadurch gekennzeichnet sind, daß die Fällung des Materials durch Umsetzung einer Metallsilikatlösung mit einer Mineralsäure in Anwesenheit eines Tensides durchgeführt wird.

Eine Ausführungsform des erfindungsgemäßen Verfahrens (Variante A) umfaßt folgende Schritte:
(1) Herstellen einer Mischung (Vorlage) bestehend aus Wasser, gegebenenfalls einer Metallsilikatlösung und einem Tensid
(2) Fällung: Gleichzeitige Zugabe einer Metallsilikatlösung und einer Mineralsäure zu der gerührten Mischung aus (1), die zuvor auf eine bestimmte Temperatur gebracht wurde,
(3) gegebenenfalls Alterung der Reaktionsmischung
(4) Abtrennung, Waschen und Trocknen des in (2) gebildeten Feststoffs
(5) Entfernung des Tensids durch Extraktion und/oder thermische Behandlung

Im Anschluß an die Schritte (4) oder (5) können zusätzlich Mahl- und Sichtschritte oder auch Formgebungsverfahren angewandt werden.

Als Metallsilikat-Lösung kann jede Silikatlösung, bevorzugt Alkalisilkat-Lösung, insbesondere Natriumsilikat-Lösung oder Wasserglas, eingesetzt werden.

Das erfindungsgemäße Herstellverfahren nach Variante A kann folgendermaßen abgewandelt werden (Variante B und C):
(1) Herstellung einer Mischung aus Wasser, Metallsilikatlösung und Tensid (Variante B) bzw. einer Mischung aus Wasser, Säurelösung und einem Tensid (Variante C) in dem Vorlagegefäß.
(2) Zugabe einer Säurelösung (Variante B) bzw. einer Metallsilikatlösung (Variante C) zu der gerührten Mischung aus (1), die zuvor auf eine bestimmte Temperatur gebracht wurde.

Die Schritte (3) - (5) werden im wesentlichen wie bei Variante A beschrieben, durchgeführt.

Als Tenside können kationische, nichtionische oder anionische Tenside eingesetzt werden. Bevorzugt werden nichtionische Tenside eingesetzt, besonders bevorzugt solche auf Polyethylenoxid-Basis, wie z. B. Alkyl-polyethylenoxidalkohole der allgemeinen Formel (H₂ₘ₊₁Cₘ)-O-(CH₂-CH₂-O)-ₙH mit m, n > 3, weil diese nicht toxisch und biologisch abbaubar sind. Nichtionische Tenside haben außerdem den Vorteil, daß sie weitgehend durch Extraktion aus dem Porensystem der gebildeten Kieselsäure entfernt werden können und somit mehrfach eingesetzt werden können.

Sehr gut geeignet sind z. B. Tenside der Tergitol 15-S-n-Reihe (Union Carbide), wobei die hydrophile Alkylgruppe aus 11 bis 15 C-Atomen und die hydrophile Kopfgruppe aus n Ethylenoxid-Einheiten mit z. B. n= 9, 12, 15, 30 bestehen kann. Weitere geeignete Polyethylenoxid-Tenside sind beispielsweise
- Igepal RC-760 (Rhone Poulenc) mit der Formel
   CH₃(CH₂)₁₁C₆H₄O(CH₂CH₂O)₁₈H,
- Triton-X-Tenside (Union Carbide) mit der Formel
   (CH₃)₃CCH₂CH(CH₃)C₆H₄O(CH₂CH₂O)ₓH mit X=8 (TX-114) oder 10 (TX-100).
- Neodol Ethoxylate (Shell Chemicals) der allgemeinen Formel H₂ₘ₊₁ Cₘ-O-(CH₂CH₂O)ₙ-H mit m=9-15 ml n=1-9

Geeignete Tenside sind weiterhin Tenside auf Zuckerbasis (Alkylpolyglycoside), die ähnliche Vorteile wie die Polyethylenoxid-Tenside besitzen. Beispiele hierfür sind:

Simulsol SL 18, (Seppic) Simulsol SL 26 sowie die Sorbitolester Montane 60 und Montane 65

Geeignete Tenside sind weiterhin Block-Copolymere, die aus hydrophilen und hydrophoben Segmenten aufgebaut sind. Beispiele hierfür sind Polyethylenoxid-polypropylenoxid-Blockcopolymere, z. B. Pluromic 64L (BASF) mit der Formel (PEO)₁₃(PPO)₃₀(PEO)₁₃, oder Polyethylenoxid-Polystyrol-Blockcopolyere, z. B. SE 10/10 und SE 30/30 der Firma Goldschmidt.

Beispiele für kationische Tenside sind quartäre Ammoniumsalze, welche Tensidcharakter haben. Diese Verbindungen enthalten eine Alkylgruppe oder eine Alkenylgruppe mit mindestens 7 C-Atomen in der längsten Kette. Besonders bevorzugt werden Ammoniumverbindungen der allgemeinen Formel RNR'₃⁺X⁻, worin R eine Alkylgruppe mit 12 bis 18 C-Atomen und vorzugsweise unverzweigt und gesättigt ist, R' eine Alkylgruppe mit 1 oder 2 C-Atomen aufweist und X das Anion, üblicherweise Hydroxid oder Halogenid, ist. Besonders geeignet zur Herstellung mesoporöser Strukturen sind Cetyltrimethylammoniumchlorid bzw. -bromid und Lauryltrimethylammoniumchlorid bzw. -bromid.

Mit quarternären Ammoniumsalzen hergestellte Materialien können durch ein MCM-41 entsprechende Fernordnung gekennzeichnet sein. Solche Materialien sind nicht Gegenstand dieser Erfindung.

Beispiele für anionische Tenside sind Alkylsulfate, Alkylaryl-sulfate, Alkylsulfate, Alkylcarboxylate, etc.

Die hier präsentierte Zusammenstellung geeigneter Tenside erhebt keinen Anspruch auf Vollständigkeit. Weitere in Frage kommende Tenside findet man beispielsweise in Ullmann's Encyclopedia of Industrial Chemistry, 5. Auflage, Band 25A, S. 751 (1994). Die einzige Voraussetzung für die Verwendung eines bestimmten Tensids zur Herstellung der erfindungsgemäßen Materialien ist die Löslichkeit, Mischbarkeit bzw. Dispergierbarkeit in Wasser in dem gewünschten Konzentrations-, pH- und Temperaturbereich.

Die Konzentration des Tensids in der Mischung mit Wasser kann in einem weiten Bereich gewählt werden, ist aber vor allem abhängig von den Eigenschaften des eingesetzten Tensids und der Fälltemperatur.

So kann bei der Verwendung von Tergitol 15-S-12 ein molares Wasser-Tensid-Verhältnis von 10-1000, bevorzugt von 20-100, besonders bevorzugt von 30-70, eingestellt werden.

Bei der Verwendung von Cetyltrimethylammonium-bromid kann man ein molares Wasser-Tensid-Verhältnis von 10-1000, bevorzugt von 20-100, besonders bevorzugt von 80-70, wählen.

Die Fällparameter in Schritt (2) des erfindungsgemäßen Verfahrens, insbesondere die eingesetzte Gesamtmenge und Konzentration der Metallsilikatlösung und der Mineralsäurelösung, die Zulaufgeschwindigkeit, der pH-Wert vor und während der Fällung, die Fälldauer, die Fälltemperatur sowie die Art und Intensität der Rührung während der Fällung können im Bereich von bekannten Standardkieselsäurefällungen (z. B. EP 0789 266) eingehalten werden.

Bei Verwendung von nichtionischen Tensiden können die Metallsilikat- und Mineralsäurelösung derart zudosiert werden, daß der pH-Wert der Reaktionsmischung während der Fällung zwischen 2 und 8, bevorzugt aber zwischen 5 und 7 liegt. Anschließend kann der pH-Wert durch weitere Säurezugabe weiter abgesenkt werden. Die optimale Fälltemperatur kann zwischen 20 und 70 °C, bevorzugt zwischen 30 und 50 °C liegen.

Bei Verwendung von kationischen Tensiden kann der pH-Wert der Reaktionsmischung zwischen 7 und 11, bevorzugt zwischen 8 und 10 liegen. Zwischenzeitlichen Abweichungen von diesen pH-Werten während der Fällung sind jedoch unkritisch. Die optimale Fälltemperatur kann zwischen 50 und 95 °C, bevorzugt zwischen 65 und 75 °C liegen.

Bei Verwendung von anionischen Tensiden kann der pH-Wert der Reaktionsmischung unter 7 liegen.

Bevorzugt kann ein Natriumwasserglas mit einem Modul von 3,4 - 3,5, einem SiO₂-Gehalt von 26,6 - 27,0 % und einem Na₂O-Gehalt von 7,8 - 8,2 % eingesetzt werden.

Die Gesamtmenge der Alkalisilikat- und Mineralsäurelösung kann so gewählt werden, daß das molare Tensid/SiO₂-Verhältnis nach der vollständigen Zugabe der Edukte zwischen 0,01 und 2,0, bevorzugt zwischen 0,1 und 1,0 und besonders bevorzugt zwischen 0,15 und 0,5 liegt. Nach der vollständigen Zugabe der Metallsilikatlösung kann der pH-Wert der Reaktionsmischung durch weitere Säurezugabe auf unter 7, bevorzugt unter 5, eingestellt werden. Als Säuren können beispielsweise Schwefelsäure, Salzsäure, Salpetersäure, Phophorsäure, Essigsäure oder Ameisensäure eingesetzt werden. Bevorzugt können Schwefel- oder Salzsäure eingesetzt werden.

Metallhaltige Kieselsäuren, wie z. B. Calciumsilikate, Boro-, Alumo-, Mangan-, Eisen- oder Titansilikate können hergestellt werden, in dem man geeignete weitere Metallsalze in (1) zu der Wasser-Tensid-Mischung gibt oder in (2) mit der Alkalisilikat- und Mineralsäurelösung zudosiert. Dabei kann die verwendete Säure teilweise oder ganz weggelassen werden. Als weitere Metallsalze können Salze der Elemente B, Al, Ga, Ge, Sn, Ti, Zr, V, Cr, Mo, W, Fe, Co, Ni oder Zn eingesetzt werden.

Nach vollständiger Zugabe der Metallsilikat-, Säure- und gegebenenfalls Metallsalzlösung kann die entstandene Suspension in Schritt (3) bei einer Temperatur von 0 °C bis 100 °C, bevorzugt zwischen Raumtemperatur und der Fälltemperatur, gegebenenfalls unter Rühren gealtert werden, wobei 12 h im allgemeinen völlig ausreichend sind.

Die Abtrennung des gebildeten Feststoffes in (4) kann vorzugsweise durch Filtration, beispielsweise mittels Kammer-, Membranfilterpresse, Bandfilter oder Drehfilter oder einer Kombination dieser Filter erfolgen. Zur Trocknung kann ein Umlauftrockner, Etagentrockner, Flashtrockner, Spinflashtrockner, Stromtrockner oder jedes andere geeignete Trocknungsaggregat verwendet werden.

Der Filterkuchen kann, nachdem seine Viskosität herabgesetzt wurde, in einem Sprühtrockner mit oder ohne integriertem Fließbett mittels Atomizer, Einstoffdüse oder Zweistoffdüse zerstäubt und getrocknet werden. Der Filterkuchen kann aber auch ohne vorherige Veränderung der Viskosität einer Mahltrocknung unterworfen werden.

Die Entfernung des Tensids aus dem Porensystem der erfindungsgemäßen Kieselsäure oder Metallsilikate kann durch Extraktion und/oder thermische Behandlung des Produkts erfolgen.

Für die Extraktion können typische Lösungsmittel, wie zum Beispiel Alkohole, Ketone, Ether, Carbonsäuren, aliphatische, aromatische Kohlenwasserstoffe oder deren Mischungen eingesetzt werden. Bei Verwendung ionischer Tenside kann es vorteilhaft sein, sowohl dem Lösungsmittel als auch dem Lösungsmittelgemisch Wasser, Mineralsäure, wie z. B. Salpetersäure oder Salze, wie zum Beispiel NaCl, zuzusetzen.

Die Extraktion kann in jeder geeigneten Extraktionsapparatur durchgeführt werden.

Alternativ kann man die erfindungsgemäßen Materialien mit dem Lösungsmittel beziehungsweise dem Lösungsmittelgemisch in einem Rührbehälter, bevorzugt bei erhöhter Temperatur, behandeln. Der Feststoff kann anschließend leicht, zum Beispiel durch Filtration, abgetrennt werden. Aus dem Extrakt kann das Tensid teilweise oder vollständig, zum Beispiel durch Abdampfen des Lösungsmittels, wiedergewonnen und erneut eingesetzt werden.

Nach der Extraktion kann eine thermische Behandlung durchgeführt werden, um eine vollständige Entfernung des Lösungsmittels zu erreichen. Dazu wird das Produkt bei einer Temperatur zwischen 150 und 900 °C, bevorzugt zwischen 300 und 600°C, in einer Inertgas- oder Luft-atmosphäre getempert. Die Dauer der thermischen Behandlung kann bevorzugt zwischen 30 min und 12 h betragen. Eine längere Temperung wirkt sich jedoch nicht nachteilig auf das Produkt aus. Der Gewichtsverlust infolge der Tensidentfernung beträgt in der Regel zwischen 20 und 80 %.

Kann durch die Extraktion nur ein kleiner Teil des Tensids aus dem Produkt entfernt werden und/oder kann das Tensid aus dem Extrakt nicht wiedergewonnen werden, so kann es vorteilhaft sein, das Tensid direkt durch Temperung zu entfernen.

Für die Vermahlung der erfindungsgemäßen Kieselsäure oder des Metallsilikates können im Anschluß an die Trocknung in (4) oder die Tensidentfernung in (5) bekannte Mühlen, wie beispielsweise eine Querstrommühle, Luftstrahlmühle oder Pendelmühle mit oder ohne eingebautem Sichter eingesetzt werden.

Die erfindungsgemäßen Kieselsäuren und Metallsilikate weisen spezifische Oberflächen größer als 700 m²/g und Mesoporenvolumina für Poren zwischen 2 und 30 nm größer als 0,5 ml/g, im allgemeinen sogar größer als 0,8 ml/g auf. Eine Ausnahme bezüglich der spezifischen Oberflächen bilden mit Zuckertensiden als Template hergestellte Kieselsäuren und Metallsilikate. Hier beträgt die spezifischen Oberfläche teilweise nur 500 m²/g.

Die erfindungsgemäßen Materialien weisen eine enge Mesoporenradienverteilung auf. Dies ist bereits an der im allgemeinen deutlich ausgeprägten Stufe in den N₂-Ad- und Desorptionsisothermen zu erkennen (Figuren 1 und 2). Der mittlere Mesoporendurchmesser kann zwischen 1,5 und 10 nm, insbesondere zwischen 2 und 5 nm, liegen. Er kann durch die Wahl des Tensids eingestellt werden, wobei der Länge der längsten C-Kette eine besondere Bedeutung zukommt,. Die enge Mesoporenverteilung kommt in der geringen Halbwertsbreite der Porengrößenverteilungskurve zum Ausdruck (Figuren 3 und 4). Mikroporen werden im allgemeinen nicht beobachtet. Die Makroporenvolumina für Poren > 30 nm können mindestens 2,5 ml/g oft sogar bis zu 5,0 ml/g betragen. Vor allem die mit nichtionischen Tensiden hergestellten Materialien weisen kein Fernordnung auf, sind also amorph. Dies unterscheidet sie von den bekannten MCM-41, MCM-48 und HM5-Typen, die kristallin sind. So wird in dem Röntgenpulverdiffraktogramm allgemein kein Reflex oder aber nur ein breiter Reflex - infolge des einheitlichne Porendurchmessers - bei 20-Werten kleiner 5° beobachtet.

Die Silanolgruppendichte der erfindungsgemäßen Kieselsäuren und Metallsilikate kann kleiner 3 0H-Gruppen pro nm², bevorzugt kleiner als 2 0H-Gruppen pro nm², betragen.

Der SiO₂-Gehalt der erfindungsgemäßen Kieselsäuren und Metallsilikate kann mindestens 95 Gew.%, bevorzugt über 98 Gew.%, bezogen auf Trockensubstanz, betragen. Metalloxid-Gehalt (MeO, wobei Me = Alkali- oder Erdalkalimetall, bevorzugt Na, K oder Ca ist) kann zwischen 0,01 und 2,0 Gew.%, bevorzugt zwischen 0,1 und 1,0 Gew.% betragen.

Die erfindungsgemäßen Metallsilikate können mindestens ein weiteres (Halb-) Metalloxid enthalten. Dabei kann es sich um Metall- oder Halbmetalle CM aus der 1.-5. Hauptgruppe oder 2.-8. Nebengruppe handeln. Bevorzugt sind Metalloxide der Metalle aus der Reihe B, Al, Ga, Ge, Sn, Ti, Zr, V, Cr, Mo, W, Mn, Fe, Co, Ni oder Zn.

In der Zusammensetzung der erfindungsgemäßen Metallsilikate kann das Verhältnis SiO₂ zu Metalloxid SiO₂/[MₘOₙ] = 5 - 10.000 mol/mol, bevorzugt 10 - 100 mol/mol, und besonders bevorzugt 20 - 60 mol/mol, sein, wobei [MₘOₙ] die Summe der Molzahlen aller enthaltenen Metalloxide MₘOₙ ist. Entsprechend niedriger ist dann der SiO₂-Gehalt, bezogen auf die Trockensubstanz.

Die erfindungsgemäßen Kieselsäuren und Metallsilikate können auf verschiedene Art und Weise modifiziert werden. Beispiele für die Modifizierung sind:
- der Einbau von Kationen, wie z. B. H⁺, Cs⁺, Seltenerdmetall - oder Edelmetallkationen durch Ionenaustausch
- die Hydrophobierung oder Funktionalisierung durch Umsetzung mit siliciumorganischen Verbindungen, wie z. B. X₄-ₙSiRₙ mit X= Cl, Br, I, OH, O-Alkyl oder O-Aryl, R = Alkyl- oder Arylrest oder organofunktionelle Grupen, wie zum Beispiel (CH₂)₃SO₃H; (CH₂)₃NH₂; (CH₂)₃N⁺Me₃Cl⁻; (CH₂)₂PPh₂.
- Einbau von Metalloxiden durch Umsetzung mit geeigneten Precursormolekülen wie z. B. Ti(OEt)₄, TiCp₂Cl₂ (Cp = Cyclopentadienyl), Mn₂(CO)₁₀, Fe(CO)₅
- Einbau von Edelmetallen oder Metall-Oxiden durch Imprägnierung mit Lösungen der Metall- oder Edelmetallsalze.

An diese Schritte kann gegebenenfalls ein Wasch-, Trocken- und/oder Kalzinierschritt in einer geeigneten Gasatmosphäre angeschlossen werden.

Die erfindungsgemäßen Materialien können zum Beispiel als Träger Wirk- und Farbstoffe, Träger für optische oder elektronische Elemente, Katalysatorträger, Füllstoffe für Kautschuk-, Silikonkautschuk-, Papieranwendungen und Batterieseperatorfolien, Mattierungsmittel, Adsorbenzien und in Trennprozessen eingesetzt werden.

Die erfindungsgemäßen Metallsilikate können weiterhin in der heterogenen Katalyse eingesetzt werden. Beispiele hierfür sind sauer oder basisch katalysierte Reaktionen, Oxidationen mit Sauerstoff, H₂O₂ oder Hydroperoxiden sowie die Oligomerisierung von Olefinen.

### Beispiel 1

### Verfahren zur Herstellung einer Kieselsäure mit enger Mesoporenradienverteilung gemäß Erfindung

23 l Wasser werden in einem beheizbaren Fällbehälter mit Rührer vorgelegt. Darin werden 1,9 l Tergitol 15-S-12 (Union Carbide) bei Raumtemperatur gelöst. Anschließend wird diese Lösung auf 40 °C erwärmt. 4160 ml Wasserglas (molares SiO₂: Na₂O-Verhältnis = 3,5, Dichte 1,342 g/ml) und 1034 ml 50 %ige Schwefelsäure werden in äquimolarer Menge zudosiert. Nach etwa 60 min ist die Fällung beendet. Während der gesamten Fälldauer wird die Fällsuspension auf pH 6 gehalten. Durch Zugabe von weiterer Schwefelsäure wird die Fällsuspension auf pH 3 eingestellt. Diese Suspension wird über Nacht im Trockenschrank bei 55 °C gealtert und danach filtriert und gewaschen. Der Filterkuchen wird portionsweise 4 h bei 540 °C in Luftatmosphäre kalziniert.

Die physikalisch-chemischen Daten der erhaltenen Kieselsäure sind in der Tabelle 1 aufgeführt.

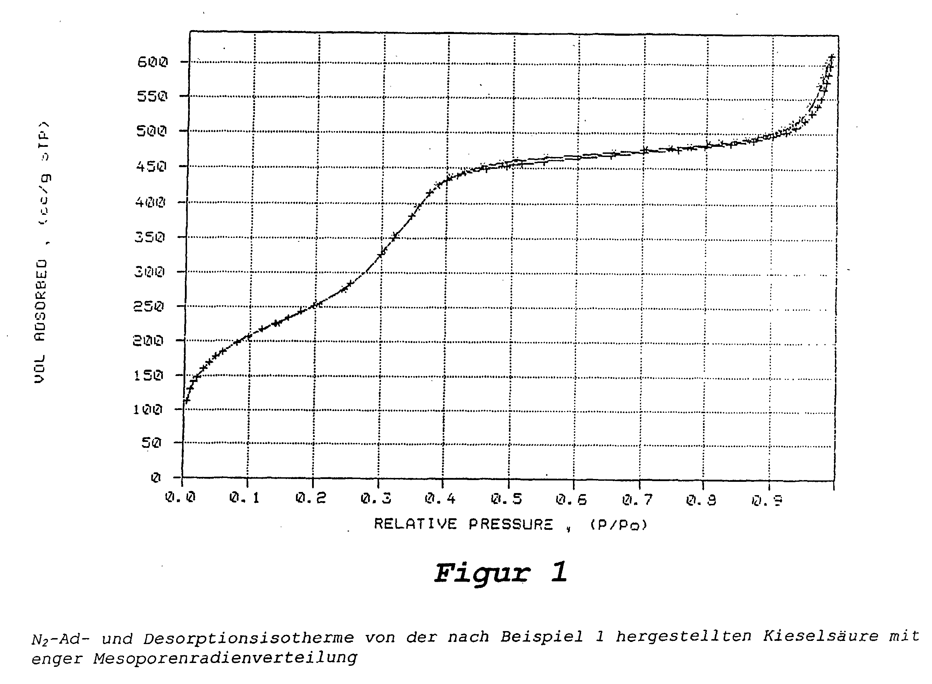

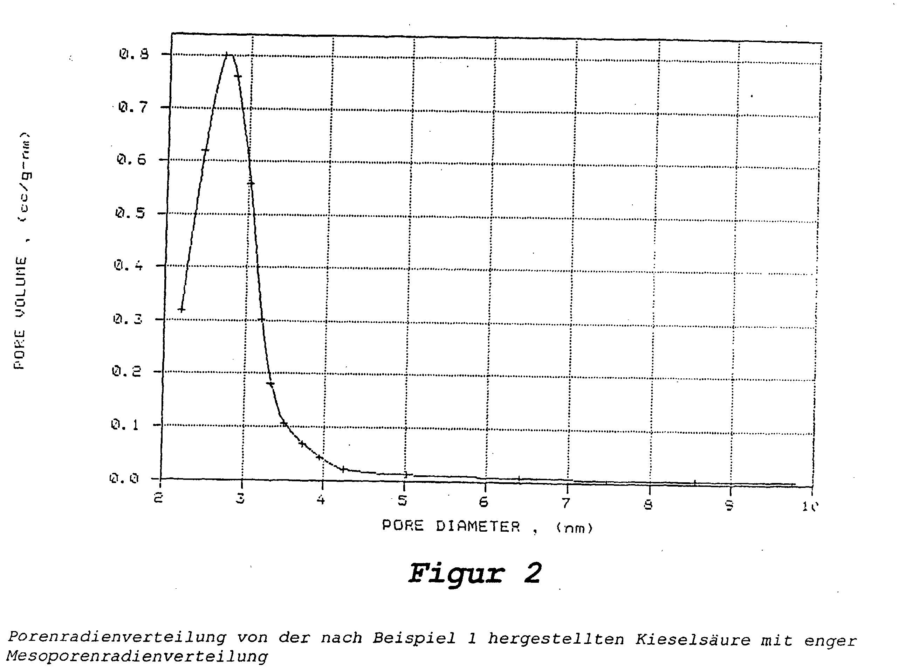

Die N₂-Ad- und Desorptionsisotherme der hergestellten Kieselsäure ist in Figur 1 graphisch dargestellt. Die Verteilung der Porenradien der hergestellten Kieselsäure ist in Figur 2 graphisch dargestellt.

### Beispiel 2

Verfahren zur Herstellung einer Kieselsäure mit enger Mesoporenradienverteilung gemäß Erfindung. Die Synthese wird wie in Beispiel 1 beschrieben druchgeführt, als nichtionisches Tensid wird Neodol 91-66 eingesetzt.

### Beispiel 3 (Vergleichsbeispiel)

### Kieselsäure, hergestellt nach DE 1299617

Die physikalisch-chemischen Daten der in Beispiel 1-3 hergestellen Materialien sind in Tabelle 1 aufgeführt.

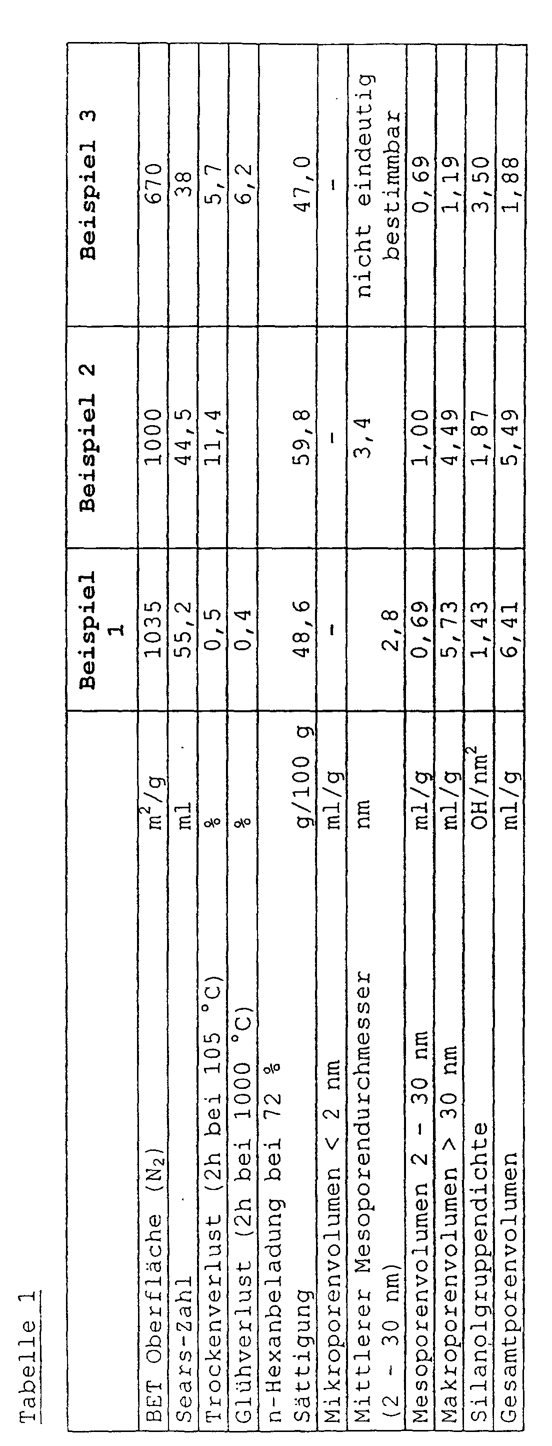

### Beispiel 4 (Vergleichsbeispiel)

### Verfahren zur Herstellung einer Kieselsäure mit regelmäßiger Mesoporenstruktur gemäß Erfindung

In einem Behälter werden 23,0 l Wasser vorgelegt und so viel Natronwasserglas zugegeben, bis ein pH-Wert von 9,0 erreicht war. Zu dieser Vorlage werden 2774 g Cetyltrimethylammoniumbromid gegeben. Unter Aufrechterhaltung einer Fälltemperatur von 72 °C und einem pH-Wert von 9,0 werden unter kräftigem Rühren 9,15 l desselben Natronwasserglases und 2,20 l Schwefelsäure (50 %ig) in 78 min. zugegeben. Es stellt sich ein Feststoffgehalt von 99 g/l ein. Danach wird weitere Schwefelsäure bis zum Erreichen von pH < 5 zugegeben. Der gebildete Feststoff wird abfiltriert und gewaschen. Der Pressenteig wird bei ca. 100 °C vorgetrocknet und anschließend bei 540 °C in Luftatmosphäre (Haltezeit: 4 h, Aufheizrate: 100 k/h) kalziniert.

Die physikalisch-chemischen Daten der erhaltenen Kieselsäure sind in der Tabelle 2 aufgeführt.

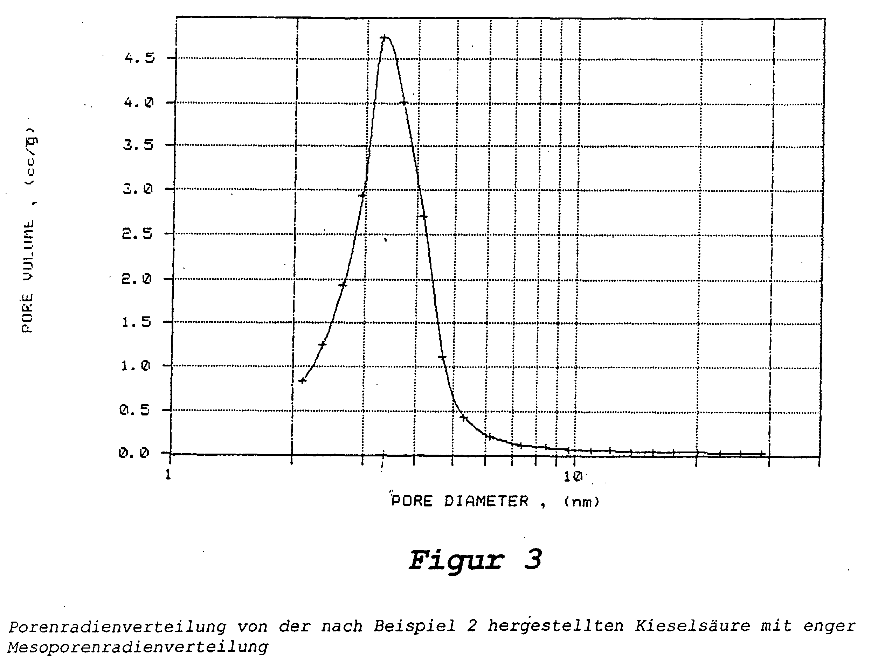

Die N₂-Ad- ünd Desorptionsisotherme der hergestellten Kieselsäure wird in Figur 3 graphisch dargestellt. Die Porenradienverteilung der hergestellten Kieselsäure wird in Figur 4 graphisch dargestellt.

### Beispiel 5

### Verfahren zur Herstellung einer Kieselsäure mit regelmäßiger Mesoporenstruktur gemäß Erfindung

Zu einer Lösung von 133,6 g Natron-Wasserglas in 250 g Wasser wird eine Mischung von 48,9 g Cetyltrimethylammonium-bromid und 250 g Wasser unter Rühren gegeben. Der pH-Wert des erhaltenen Gels beträgt 11,0. Anschließend wird auf 50 °C erwärmt und bei dieser Temperatur unter kräftigem Rühren eine 50 %ige Schwefelsäure zugegeben, bis der pH der Reaktionsmischung einen Wert von 5,0 erreicht hat. Der Gesamtverbrauch an Schwefelsäure beträgt 34,0 g. Außerdem werden weitere 90 g Wasser zugegeben. Die Reaktionsmischung wird anschließend über Nacht bei 50°C gerührt. Der gebildete Feststoff wird über eine Filternutsche abgetrennt, gewaschen, bei 110 °C getrocknet und bei 540°C in Luftatmosphäre kalziniert (Haltezeit 4 h). Die Ausbeute beträgt 37,5 g. Dies sind 100 % der theoretischen Ausbeute.

Die physikalisch-chemischen Daten der erhaltenen Kieselsäure sind in der Tabelle 2 aufgeführt.

### Beispiel 6 (Vergleichsbeispiel)

Kieselsäure, hergestellt nach EP 0 647 591. Die physiklisch-chemischen Daten sind in der Tabelle 2 aufgeführt.

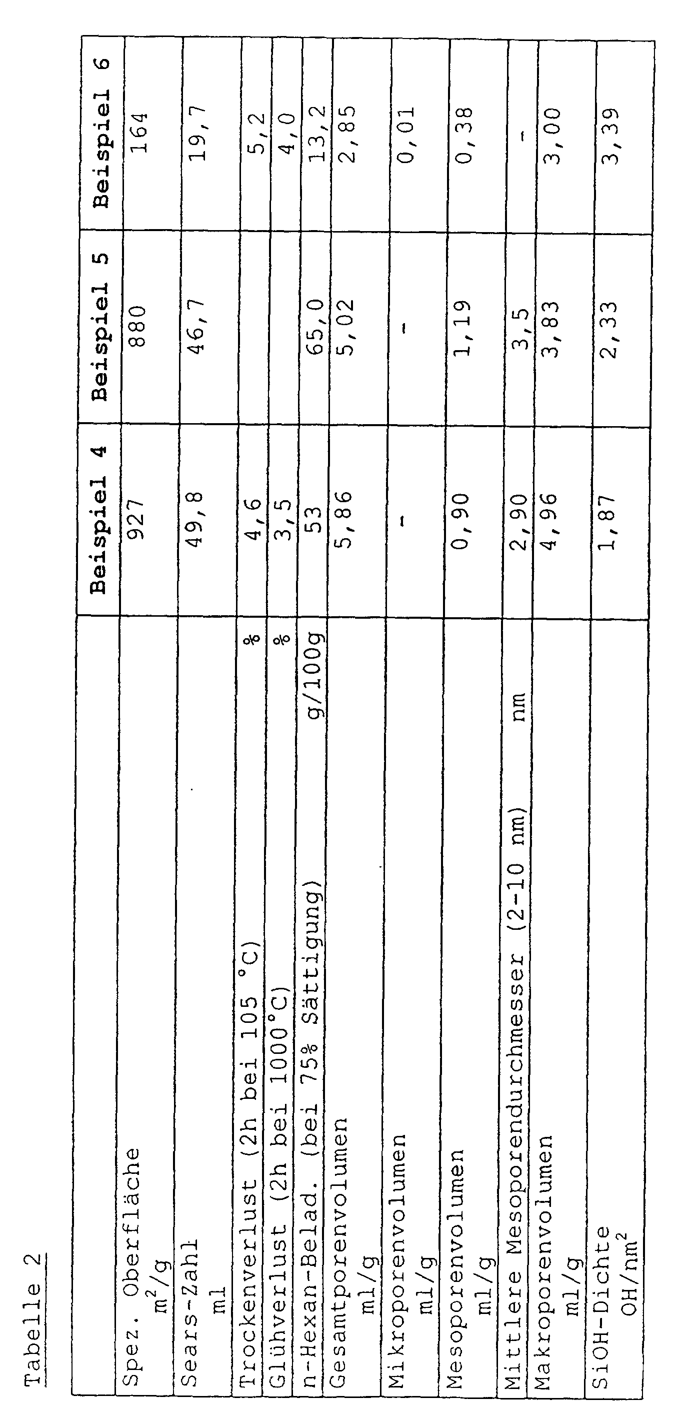

### Beispiel 7

### Verfahren zur Herstellung einer Kieselsäure mit regelmäßigen Mesoporenstruktur gemäß Erfindung

Zu einer Lösung von 164,25 g Wasserglas in 200 g Wasser wird eine Mischung von 77,4 g Simulsol S18 C und 600 g Wasser unter kräftigem Rühren gegeben. Nach weiteren 30 min Rühren wird ein pH-Wert von 11,3 gemessen. Dann wird durch langsame Zugabe einer 50 %ige Schwefelsäurelösung ein pH-Wert von 5,0 eingestellt (Gesamtmenge 42,4 g). Dabei wird die Rührgeschwindigkeit so eingestellt, daß ein gute Durchmischung der Reaktionsmischung gewährleistet ist. Außerdem werden weitere 100 g Wasser zugegeben. Nach beendeter Zugabe der Schwefelsäure wird noch für weitere 30 Minuten gerührt. Anschließend wird der gebildete Feststoff über eine Filternutsche abgetrennt, gewaschen, bei 120 °C getrocknet und bei 540 °C in Luftatmosphäre kalziniert (Haltezeit 4 h). Die Ausbeute beträgt 44,3g (das heißt, 99,8 % der theoretischen Ausbeute).

Die erhaltene Kieselsäure weist die folgenden physikalisch-chemischen Parameter auf:

| | | |
|---|---|---|
| BET-Oberfläche | m²/g | 500 |
| Sears-Zahl | ml | 18,3 |
| n-Hexanbeladung | [g/100 g] | 54,0 |
| Mikroporenvolumen | ml/g | - |
| Mesoporenvolumen | ml/g | 1,07 |
| Makroporenvolumen | ml/g | 1,77 |
| Mittlere. Porendurchmesser | nm | 5,9 |
| Silanolgruppendichte | OH/nm² | 2,11 |

### Beispiel 8

### Verfahren zur Herstellung einer Kieselsäure mit regelmäßiger Mesoporenstruktur gemäß Erfindung

Zu einer Lösung von 164,3 g Natronwasserglas (27,40 Gew.-% SiO₂; 8,10 Gew.-% Na₂O; 64,5 Gew.-% H₂O) in 200 g entionisiertem Wasser wird eine bei 30 °C hergestellte Mischung aus 60,0 g eines Polystyrol-Polyethylenoxid-Blockcopolymers (Versuchsprodukt SE 1010 der Firma Th. Goldschmidt AG) und 500 g entionisiertem Wasser gegeben. Zu dieser Mischung wird dann innerhalb von 40 min bei einer Temperatur zwischen 33 und 36 °C unter Rühren eine 50 Gew.-%ige Schwefelsäure-Lösung bis zum Erreichen eines pH-Wertes von 5,0 zugetropft (Gesamtverbrauch an Schwefelsäure: 41,4 g). Das hochviskose Gel wird über Nacht bei 30 °C gealtert, der gebildete Feststoff anschließend abfiltriert, gewaschen, über Nacht bei 120 °C getrocknet und 2 h bei 540 °C kalziniert (Aufheizrate 100 °C/h).

Die N₂-Adsorption und Desorption der hergestellten Kieselsäure wird in der Figur 5 graphisch dargestellt.

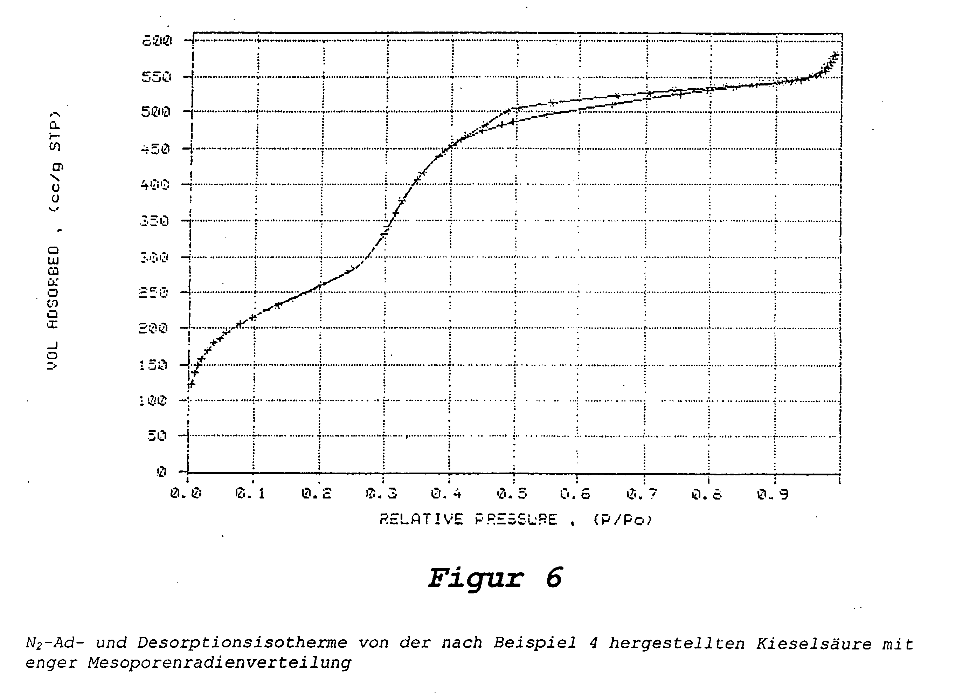

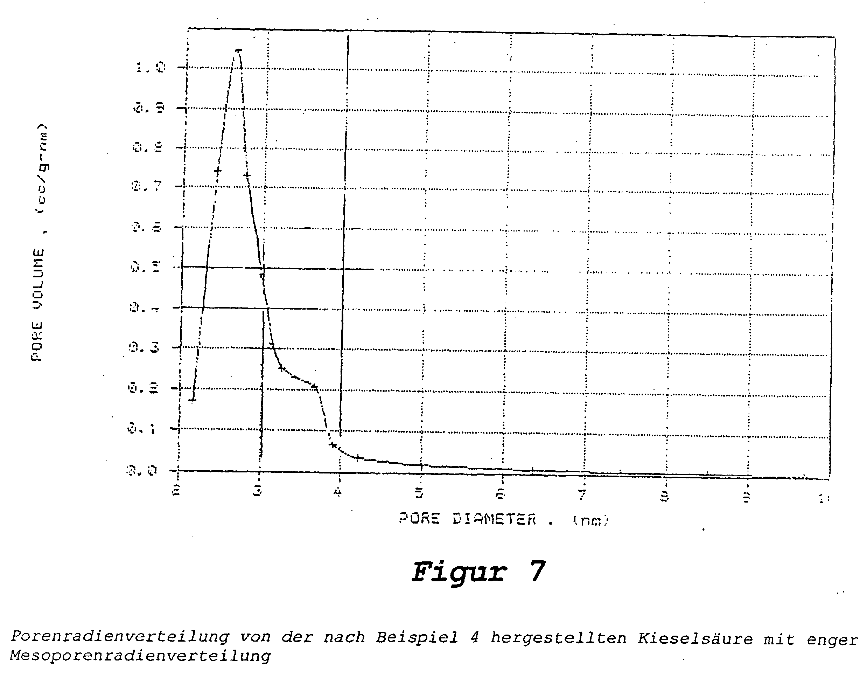

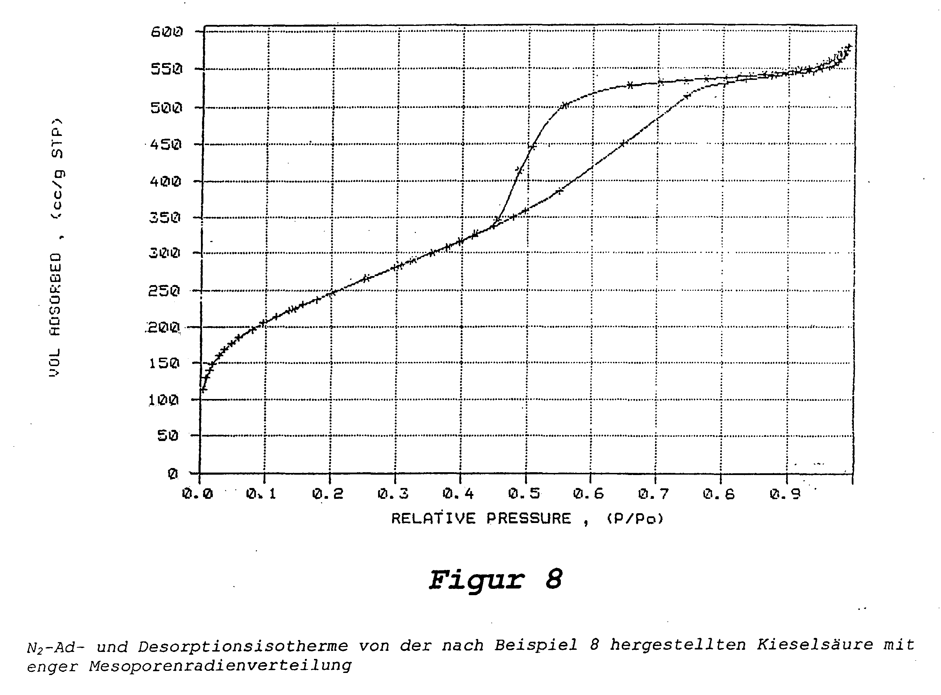

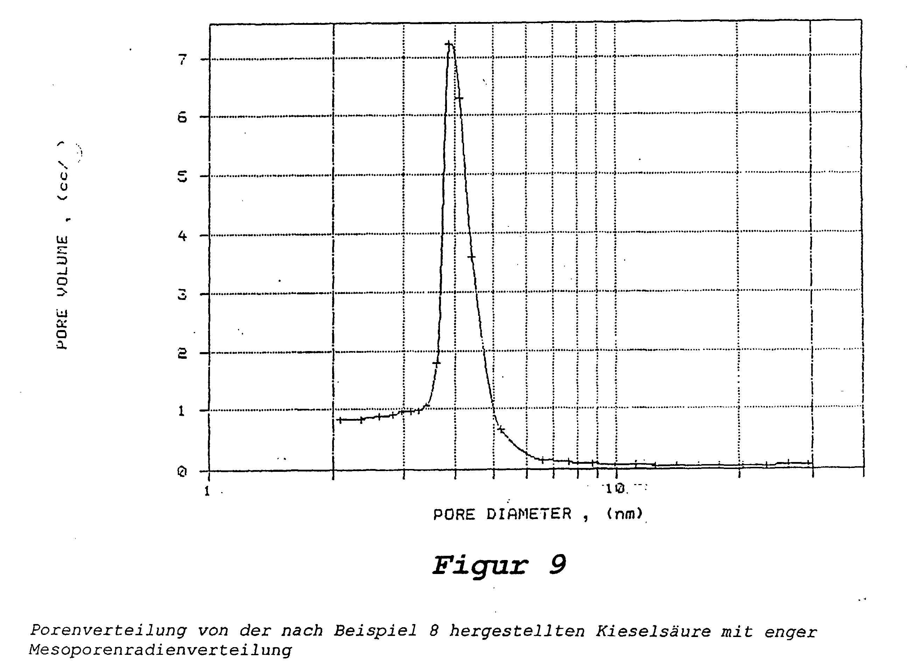

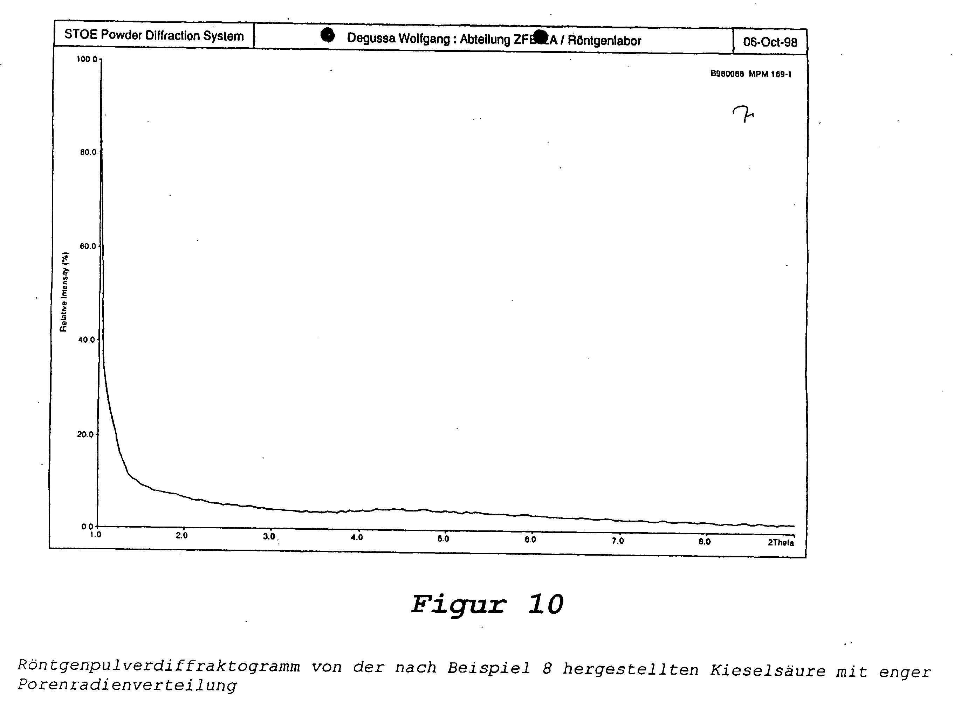

Die Porenradienverteilung der hergestellten Kieselsäure wird in Figur 6 graphisch dargestellt.

Die erhaltene Kieselsäure weist die folgenden physikalisch-chemischen Kenndaten auf:

| | | |
|---|---|---|
| BET-Oberfläche | m²/g | 896 |
| Sears-Zahl | ml | |
| n-Hexanbeladung bei 70 % Sättigung | g/100 g | 53,0 |
| Mikroporenvolumen | ml/g | - |
| Mesoporenvolumen | ml/g | 0,85 |
| Mittlerer Mesoporendurchmesser (2 - 10 nm) | nm | 3,65 |
| Makroporenvolumen | ml/g | 1,40 |
| Silanolgruppendichte | OH/nm² | 1,88 |

## Patentansprüche

1. Gefällte Kieselsäuren und Metallsilikate
**dadurch gekennzeichnet, daß**
a) sie eine enge Mesoporenradienverteilung aufweisen,
b) der mittlere Porendurchmesser für alle Poren zwi schen 2 und 10 nm einen Wert zwischen 2 und 8 nm hat,
c) die spezifische Oberfläche größer als 500 m²/g ist,
d) das Gesamporenvolumen größer als 3,0 ml/g ist,
e) das Porenvolumen für Poren zwischen 2 und 30 nm größer als 0,5 ml/g ist,
f) keine oder nur wenig Mikroporen aufweisen
g) frei von kristallinen Phasen sind beziehungsweise keine Fernordnung aufweisen,
h) die Zahl der Silanolgruppen, bezogen auf die spe zifische Oberfläche, kleiner als 3 nm⁻², bevor zugt kleiner als 2 nm⁻², ist.

2. Verfahren zur Herstellung der gefällten Kieselsäuren und Metallsilikate mit regelmäßiger Mesoporenstruktur nach Anspruch 1,
**dadurch gekennzeichnet,**
**daß** man die Fällung durch Umsetzung einer Metallsilikat-Lösung mit einer Mineralsäure in Anwesenheit eines gegebenenfalls nichtionischen Tensides durchführt.

3. Verfahren zur Herstellung der gefällten Kieselsäure und Metallsilikate nach Anspruch 1,
**dadurch gekennzeichnet,**
**daß** man zu der Reaktionsmischung mindestens ein weiteres Metallsalz gibt.

4. Verfahren zur Herstellung der gefällten Kieselsäure und Metallsilikate mit regelmäßiger Mesoporenstruktur nach Anspruch 2,
**dadurch gekennzeichnet,**
**daß** man die folgenden Schritte durchführt: (Variante A)
(1) Herstellen einer Mischung (Vorlage) bestehend aus Wasser, gegebenenfalls einer Metallsilikatlösung und einem Tensid
(2) Fällung: Gleichzeitige Zugabe einer Metallsilikatlösung und einer Mineralsäure zu der gerührten Mischung aus (1), die zuvor auf eine bestimmte Temperatur gebracht wurde,
(3) gegebenenfalls Alterung der Reaktionsmischung
(4) Abtrennung, Waschen und Trocknen des in (2) gebildeten Feststoffs
(5) Entfernung des Tensids durch Extraktion und/oder thermische Behandlung

5. Verfahren zur Herstellung der gefällten Kieselsäure und Metallsilikate mit regelmäßiger Mesoporenstruktur nach Anspruch 2,
**dadurch gekennzeichnet,**
**daß** man die folgenden Schritte durchführt: (Variante B)
(1) Herstellung einer Mischung aus Wasser, Metallsilikatlösung und Tensid (Variante B) bzw. einer Mischung aus Wasser, Säurelösung und einem Tensid (Variante C) in dem Vorlagegefäß.
(2) Zugabe einer Säurelösung (Variante B) bzw. einer Metallsilikatlösung (Variante C) zu der gerührten Mischung aus (1), die zuvor auf eine bestimmte Temperatur gebracht wurde.
Die Schritte (3) - (5) werden im wesentlichen wie bei Variante A beschrieben, durchgeführt.

6. Verfahren zur Herstellung der gefällten Kieselsäure und Metallsilikate mit regelmäßiger Mesoporenstruktur nach Anspruch 2,
**dadurch gekennzeichnet,**
**daß** man die folgenden Schritte durchführt: (Variante C)
(1) Herstellung einer Mischung aus Wasser, Metallsilikatlösung und Tensid (Variante B) bzw. einer Mischung aus Wasser, Säurelösung und einem Tensid (Variante C) in dem Vorlagegefäß.
(2) Zugabe einer Säurelösung (Variante B) bzw. einer Metallsilikatlösung (Variante C) zu der gerührten Mischung aus (1), die zuvor auf eine bestimmte Temperatur gebracht wurde.

7. Verfahren zur Modifizierung der Kieselsäuren und Metallsilikate gemäß Anspruch 1,
**dadurch gekennzeichnet,**
**daß** man durch Ionenaustausch Kationen einbaut.

8. Verfahren zur Modifizierung der Kieselsäuren und Metallsilikate gemäß Anspruch 1,
**dadurch gekennzeichnet,**
**daß** man durch Umsetzung mit siliciumorganischen Verbindungen eine Hydrophobierung oder Funktionalisierung bewirkt.

9. Verfahren zur Modifizierung der Kieselsäuren und Metallsilikate gemäß Anspruch 1,
**dadurch gekennzeichnet,**
**daß** man die Kieselsäuren und Metallsilikate mit geeigneten Metall- oder Metalloxid precursorn umsetzt.

10. Verfahren zur Modifizierung der Kieselsäuren und Metallsilikate gemäß Anspruch 1,
**dadurch gekennzeichnet,**
**daß** man Metall- oder Edelmetallsalze zusetzt.

11. Verwendung der gefällten Kieselsäuren und Metallsilikate mit regelmäßiger Mesoporenstruktur nach Anspruch 1 als
- Träger für Wirk- oder Farbstoffe
- Träger für optische oder elektrotechnische Elemente
- Katalysatorträger und/oder Katalysator
- Füllstoffe, beispielsweise für Kautschuk-, Silikonkautschuk-, Papieranwendungen und Batterieseparatorfolien
- Mattierungsmittel
- Adsorbenzien
- Einsatzstoff in Trennverfahren

## Claims

1. Precipitated silicic acids and metal silicates
**characterised in that**
a) they have a narrow mesopore radius distribution,
b) the mean pore diameter for all pores between 2 and 10 nm has a value between 2 and 8 nm,
c) the specific surface is greater than 500 m²/g,
d) the total pore volume is greater than 3.0 ml/g,
e) the pore volume for pores between 2 and 30 nm is greater than 0.5 ml/g,
f) they do not exhibit any or only a few micropores,
g) they are free of crystalline phases and/or do not exhibit any long-range order
h) the number of silanol groups referred to the specific surface is less than 3 nm⁻², preferably less than 2 nm⁻².

2. Process for preparing the precipitated silicic acids and metal silicates with regular mesopore structure according to claim 1,
**characterised in that**
the precipitation is carried out by reacting a metal silicate solution with a mineral acid in the presence of an optionally non-ionic surfactant.

3. Process for preparing the precipitated silicic acid and metal silicates according to claim 1,
**characterised in that**
at least one further metal salt is added to the reaction mixture.

4. Process for preparing the precipitated silicic acid and metal silicates with regular mesopore structure according to claim 2,
**characterised in that**
the following steps are carried out: (variant A)
(1) Preparation of a mixture (preliminary batch) consisting of water and optionally a metal silicate solution and a surfactant
(2) Precipitation: simultaneous addition of a metal silicate solution and a mineral acid to the stirred mixture of (1), which has previously been heated to a specific temperature
(3) Optional ageing of the reaction mixture
(4) Separation, washing and drying of the solid formed in (2)
(5) Removal of the surfactant by extraction and/or thermal treatment

5. Process for preparing the precipitated silicic acid and metal silicates with regular mesopore structure according to claim 2,
**characterised in that**
the following steps are carried out: (variant B)
(1) Preparation of a mixture of water, metal silicate solution and surfactant (variant B) or a mixture of water, acid solution and a surfactant (variant C) in the preliminary batch vessel.
(2) Addition of an acid solution (variant B) or a metal silicate solution (variant C) to the stirred mixture of (1), which has previously been heated to a specific temperature.
The steps (3) - (5) are carried out substantially as described for variant A.

6. Process for preparing the precipitated silicic acid and metal silicates with regular mesopore structure according to claim 2,
**characterised in that**
the following steps are carried out: (variant C)
(1) Preparation of a mixture of water, metal silicate solution and surfactant (variant B) or a mixture of water, acid solution and a surfactant (variant C) in the preliminary batch vessel.
(2) Addition of an acid solution (variant B) or a metal silicate solution (variant C) to the stirred mixture of (1), which has previously been heated to a specific temperature.

7. Process for modifying the silicic acids and metal silicates according to claim 1, **characterised in that** cations are incorporated by ion exchange.

8. Process for modifying the silicic acids and metal silicates according to claim 1, **characterised in that** a hydrophobing or functionalisation is effected by reaction with organosilicon compounds.

9. Process for modifying the silicic acids and metal silicates according to claim 1, **characterised in that** the silicic acids and metal silicates are reacted with suitable metal or metal oxide precursors.

10. Process for modifying the silicic acids and metal silicates according to claim 1, **characterised in that** metal salts or noble metal salts are added.

11. Use of the precipitated silicic acids and metal silicates with regular mesopore structure according to claim 1 as
- Carriers for active constituents or dyes
- Carriers for optical or electrotechnical components
- Catalyst support and/or catalysts
- Fillers, for example for rubber, silicone rubber or paper applications and battery separator sheets
- Matting agents
- Adsorbent agents
- Feedstock in separation processes

## Revendications

1. Silices et silicates métalliques précipités,
**caractérisés en ce qu'**
a) ils présentent une étroite répartition de rayons de mésopores,
b) le diamètre moyen de pores présente pour tous les pores compris entre 2 et 10 nm une valeur comprise entre 2 et 8 nm,
c) la surface spécifique est supérieure à 500 m₂/g,
d) le volume total de pores est supérieur à 3,0 ml/g,
e) le volume de pores pour les pores compris entre 2 et 30 nm est supérieur à 0,5 ml/g,
f) il n'y a pas, ou peu de micropores,
g) ils ne présentent pas d'ordre à grande distance ou sont sans phase cristalline,
h) le nombre des groupes silanol, par rapport à la surface spécifique, est inférieur à 3 nm⁻², de préférence inférieur à 2 nm⁻².

2. Procédé de production des silicates et silicates métalliques précipités avec structure régulière des mésopores selon la revendication 1,
**caractérisé en ce qu'**
on réalise la réaction par précipitation d'une silicate métallique avec un acide minéral en présence d'un agent tensioactif éventuellement non ionique.

3. Procédé de production de l'acide silicique et des silicates métalliques précipités selon la revendication 1,
**caractérisé en ce qu'**
on ajoute au mélange réactionnel au moins un autre sel métallique.

4. Procédé de production de la silice et des silicates métalliques précipités à structure régulière des mésopores selon la revendication 2,
**caractérisé en ce qu'**
on réalise les étapes suivantes (variante A) :
(1) production d'un mélange (modèle) constitué d'eau, le cas échéant d'une solution de silicate métallique et d'un agent tensioactif,
(2) précipitation : addition simultanée d'une solution de silicate métallique et d'un acide minéral au mélange agité de (1), qui a été préalablement amené à une température déterminée,
(3) le cas échéant vieillissement du mélange réactionnel,
(4) séparation, lavage et séchage du solide formé en (2),
(5) élimination d'agent tensioactif par extraction et/ou traitement thermique.

5. Procédé de production de la silice et des silicates métalliques précipités à structure régulière de mésopores selon la revendication 2,
**caractérisé en ce qu'**
on réalise les étapes suivantes : (variante B)
(1) production d'un mélange d'eau, d'une solution de silicate métallique et d'un agent tensioactif (variante B), ou selon les cas d'un mélange d'eau, d'une solution d'acide et d'un agent tensioactif (variante C) dans le récipient de réserve,
(2) addition d'une solution d'acide (variante B) ou d'une solution de silicate métallique (variante C) au mélange agité de (1), qui a été préalablement amené à une température déterminée ;
les étapes (3) à (5) étant réalisées essentiellement comme il est dit dans la variante A.

6. Procédé de production de la silice et des silicates métalliques précipités à structure régulière de mésopores selon la revendication 2,
**caractérisé en ce qu'**
on réalise les étapes suivantes : (variante C)
(1) production d'un mélange d'eau, d'une solution de silicate métallique et d'un agent tensioactif (variante B), ou selon les cas d'un mélange d'eau, d'une solution d'acide et d'un agent tensioactif (variante C) dans le récipient de réserve,
(2) addition d'une solution d'acide (variante B) ou d'une solution de silicate métallique (variante C) au mélange agité de (1), qui a été préalablement amené à une température déterminé.

7. Procédé de modification des silices et silicates métalliques selon la revendication 1,
**caractérisée en ce qu'**
on intègre des cations par échange d'ions.

8. Procédé de modification des silices et silicates métalliques selon la revendication 1,
**caractérisé en ce que**
par réaction avec des composés d'organosilicium on produit une hydrophobisation ou une fonctionnalisation.

9. Procédé de modification des silices et des silicates métalliques selon la revendication 1,
**caractérisé en ce qu'**
on fait réagir les silices et silicates métalliques avec des précurseurs de métaux ou d'oxydes métalliques.

10. Procédé de modification des silices et silicates métalliques selon la revendication 1,
**caractérisé en ce qu'**
on ajoute des sels de métaux ou de métaux nobles.

11. Utilisation des silicates et silicates métalliques précipités à structure régulière de mésopores selon la revendication 1 comme
- supports pour matières actives ou colorants,
- supports pour éléments optiques ou électrotechniques,
- supports de catalyseurs et/ou catalyseurs,
- charges, par exemple pour les applications dans les domaine du caoutchouc, du caoutchouc de silicone et du papier, et feuilles pour séparateurs de batteries,
- agents de dépolissage,
- adsorbants,
- matières employées dans les procédés de séparation.
